# EUROPEAN PATENT APPLICATION

(11) **EP 4 400 629 A1**
(43) Date of publication of application: **17.07.2024**
(21) Application number: 22866387.8
(22) Date of filing: 22.08.2022
(51) Int. Cl.: C25B 1/04, C25B 9/00, C25B 15/00

(54) **HYDROGEN GENERATION DEVICE HAVING HEAT SINK**

(30) Priority: 08.09.2021 CN 202111047651
(71) Applicant: Lin, Hsin-Yung, Taoyuan City, Taiwan 33341 (CN)
(72) Inventor: Lin, Hsin-Yung, Taoyuan City, Taiwan 33341 (CN)
(74) Representative: Wang, Bo
(86) International application number: PCT/CN2022/113819
(87) International publication number: WO 2023/035914

(57) **Abstract**

A hydrogen gas generating device with heat dissipator includes a water tank, an electrolytic module and a heat dissipator. The water tank has an accommodating space configured for accommodating water. The electrolytic module is configured in the accommodating space of the electrolytic module and to receive and electrolyze water to generate gas comprising hydrogen. The heat dissipator is coupled to the water tank and includes an inlet tube, an outlet tube and at least one tubular structure. The inlet tube is connected to the water tank and configured to receive the water from the water tank. The outlet tube is connected to the water tank and configured to output the electrolytic water to the water tank. The tubular structure connects to the inlet tube and the outlet tube to provide the electrolytic water to pass through.

## Description

### BACKGROUND OF THE INVENTION

### 1. Field of the invention

The present invention relates to a hydrogen gas generating device, and more particularly, to a hydrogen gas generating device with heat dissipator.

### 2. Description of the prior art

As people have always been paying much attention on health developments, many developments in medical technology are often targeted on treating diseases and prolonging human life. Most of the treatments in the past are passive, which means that the disease is treated only when it occurs. The treatments include an operation, a medication treatment, a radiation therapy, or even a medical treatment for cancer. However, in recent years, most of the researches from medical experts are gradually moving towards preventive medical methods, such as research on healthy food, screening and the prevention of inherited diseases, which actively prevents diseases from occurring in the future. Due to the focus of the prolongation of human life, many anti-aging and anti-oxidation technologies including skin care products and anti-oxidation food/medicine are gradually being developed and becoming increasingly popular to the general public.

Studies have found that there are instable oxygen species (O+), also known as free radicals, in the human body. The free radicals which are usually generated due to diseases, diet, environment or one's lifestyle can be excreted in the form of water by reacting with the inhaled hydrogen. With this method, the amount of free radicals in the human body can be reduced, thereby restoring the body condition from an acidic state to an alkaline state, achieving an anti-oxidation, anti-aging and beauty health effect, and even eliminating chronic diseases. In addition, in terms of increasing the amount of hydrogen absorption, increasing the hydrogen absorption time (such as hydrogen absorption during sleep) can also effectively improve the hydrogen absorption efficiency.

Currently, hydrogen production equipment on the market usually produces hydrogen by electrolyzing water. When the hydrogen generator produces hydrogen, a large amount of excessive thermal energy will be generated due to electrolysis. If the excessive heat is not dissipated quickly, the heat will be accumulated in the device to raise the temperature inside the device. In addition, the long-term operation of equipment at high temperature will not only reduce the operating efficiency of electronic components, but also cause thermal damage to the equipment and equipment, thereby shortening the service life.

Therefore, it is necessary to develop a hydrogen production device with a good heat dissipation mechanism to solve the problems of the prior art.

### SUMMARY OF THE INVENTION

In view of this, the present invention provides a hydrogen gas generating device with heat dissipator to solve the problems of the prior art. According to an embodiment of the present invention, a hydrogen gas generating device with heat dissipator of the present invention comprises a water tank, an electrolytic module, an integrated pathway device, a condensate filter, and a heat dissipator. The water tank has an accommodating space for accommodating water. The electrolytic module is configured in the accommodating space of the water tank for receiving the water from the water tank and electrolyzing the water to generate gas comprising hydrogen. The integrated pathway device is configured above the electrolytic module and comprises a gas inlet passageway and a gas outlet passageway, wherein the gas inlet passageway is configured to receive the gas comprising hydrogen, and the gas outlet passageway is configured to output the gas comprising hydrogen. The condensate filter couples to the integrated pathway device and is configured to filter the gas comprising hydrogen received by the gas inlet passageway. The heat dissipator couples to the water tank and comprises an inlet tube, an outlet tube, and at least one tubular structure. The inlet tube is connected to an upper part of the side wall of the water tank and is configured to receive the water from the water tank. The outlet tube is connected to a lower part of the side wall of the water tank and is configured to output the water to the water tank. The at least one tubular structure is fluidly coupled to the inlet tube and the outlet tube for the water to pass through.

Wherein, the electrolytic module has a case, a partition extending from the case divides the accommodating space into an upper hollow space and a lower hollow space. The inlet tube is fluidly coupled to the upper hollow space and the outlet tube is fluidly coupled to the lower hollow space.

Furthermore, the side wall has a first opening and a second opening, the first opening fluidly connects the upper hollow space and the inlet tube, and the second opening fluidly connects the lower hollow space and the outlet tube.

Wherein, a water level in the water tank is higher than the bottom of the inlet tube.

The heat dissipator further comprises at least one spiral structure configured in the at least one tubular structure for the water to pass through the tubular structure along the spiral structure.

Wherein, the tubular structure has a stagnation structure configured for the water to pass through the tubular structure along the spiral structure.

The heat dissipator has a plurality of heat fins penetrated by the tubular structure for dissipating the heat of the at least one tubular structure.

The hydrogen gas generating device further comprises a cooling channel located beside the water tank, wherein the heat dissipator is accommodated in the cooling channel.

The hydrogen gas generating device also comprises a fan disposed near the heat dissipator, wherein the fan is configured to guide air from an external environment into the cooling channel.

Wherein, the hydrogen gas generating device further comprises a first fan and a second fan located at both sides of the cooling channel respectively. The first fan is configured to guide air from an external environment into the cooling channel, and the second fan is configured to guide the air from the cooling channel to the external environment.

The hydrogen gas generating device further comprises a canister filter for filtering the gas comprising hydrogen. One end of the canister filter is fluidly coupled to a gas output port of the hydrogen gas generating device, and the other end of the canister filter is capable to couple to a respiratory tube worn by a user.

The hydrogen gas generating device further comprises a UV source disposed near the gas outlet passageway, and the UV source is configured to emit UV light to sterilize the gas outlet passageway.

Wherein, the hydrogen gas generating device further comprises a humidification cup and a UV source. The humidification cup is coupled to the integrated pathway device for accommodating a supplementary water and for receiving and humidifying the gas comprising hydrogen from the integrated pathway device. The UV source is configured in the integrated pathway device or the humidification cup for emitting UV light to sterilize the integrated pathway device or the humidification cup.

The inlet tube, the outlet tube, and the at least one tubular structure are integrally formed, and a shape of the at least one tubular structure is wavy.

The heat dissipator further comprises a first heat dissipator and a second heat dissipator. The first heat dissipator and the second heat dissipator respectively comprise the inlet tube, the outlet tube, and the at least one tubular structure. The first heat dissipator is configured on the side wall of the water tank, and the second heat dissipator is configured on the other side wall of the water tank opposite to the side wall of the water tank.

Wherein, the water tank comprises a bottom and the side wall has a side wall height. The inlet tube is coupled to a position on the side wall with a height of 80%-100% of the side wall height from the bottom, and the inlet tube is coupled to a position on the side wall with a height of 0%-20% of the side wall height from the bottom.

The hydrogen gas generating device further comprises a water pump coupled to the outlet tube, wherein the water pump is configured to guide the water cooled by the heat dissipator into the water tank.

Furthermore, the hydrogen gas generating device comprises a housing and a bucket. The housing is configured to accommodate a water tank, an electrolytic module, an integrated pathway device, a condensate filter, and a heat dissipator. The bucket is configured out of the housing and is coupled to the condensate filter, wherein the bucket is configured for supplying a supplementary water to the water tank through the condensate filter.

The hydrogen gas generating device further comprises a bucket holder configured on the housing for holding the bucket.

According to another embodiment of the present invention, a hydrogen gas generating device with heat dissipator of the present invention comprises a water tank, an electrolytic module, and a heat dissipator. The water tank has an accommodating space for accommodating water. The electrolytic module is configured in the accommodating space of the water tank for receiving the water from the water tank and electrolyzing the water to generate gas comprising hydrogen. The heat dissipator is coupled to the water tank and comprises an inlet tube, an outlet tube, and at least one tubular structure. The inlet tube is connected to a side wall of the water tank to receive the water from the water tank. The outlet tube is connected to the side wall of the water tank to output the water to the water tank. The tubular structure is fluidly coupled to the inlet tube and the outlet tube for the water to pass through. Wherein, a water level in the water tank is higher than a bottom of the inlet tube, and a shape of the at least one tubular structure is wavy.

According to another embodiment of the present invention, a hydrogen gas generating device with heat dissipator of the present invention comprises a water tank, an electrolytic module, an integrated pathway device, a heat dissipator, and a UV source. The water tank has an accommodating space for accommodating water. The electrolytic module is configured in the accommodating space of the water tank for receiving the water from the water tank and electrolyzing the water to generate gas comprising hydrogen. The integrated pathway device is configured above the electrolytic module and comprises a gas inlet passageway and a gas outlet passageway, wherein the gas inlet passageway is configured to receive the gas comprising hydrogen, and the gas outlet passageway is configured to output the gas comprising hydrogen. The heat dissipator couples to the water tank and comprises an inlet tube, an outlet tube, and at least one tubular structure. The inlet tube is configured to receive the water from the water tank. The outlet tube is configured to output the water to the water tank. The at least one tubular structure is fluidly coupled to the inlet tube and the outlet tube for the water to pass through. The UV source is configured in the hydrogen gas generating device to emit UV light to sterilize the hydrogen gas generating device.

The hydrogen gas generating device further comprises a canister filter fluidly coupled to a gas output port of the hydrogen gas generating device for filtering the gas comprising hydrogen.

The hydrogen gas generating device further comprises a nebulizer fluidly coupled to the gas outlet passageway to receive the gas comprising hydrogen, wherein the nebulizer comprises a gas output port, the nebulizer is capable to selectively generate an atomized gas and mix the atomized gas with the gas comprising hydrogen to form a healthy gas, and the UV source is disposed near the nebulizer and configured to emit UV light to sterilize the nebulizer.

Wherein, the hydrogen gas generating device further comprises a humidification cup coupled to the integrated pathway device for accommodating a supplementary water and receiving and humidifying the gas comprising hydrogen from the integrated pathway device. The UV source is configured near the integrated pathway device or the humidification cup for emitting UV light to sterilize the integrated pathway device or the humidification cup.

In summary, the hydrogen gas generating device of the present invention isolates the water with the heat in the upper hollow space of the water tank by the partition, and then cools the water by the heat dissipator which is fluidly coupled to the upper hollow space of the water tank and the lower hollow space of the water tank. Also, the hydrogen gas generating device of the present invention reduces the heat of the heat dissipator by a fan and a heat dissipator accommodating in the cooling channel, so that to improve the heat dissipation efficiency. The hydrogen gas generating device of the present invention also can actively guide water in the water tank to the heat dissipator by the water pump for heat dissipation, so as to improve the heat dissipation efficiency. In addition, the hydrogen gas generating device improves the heat dissipation efficiency by extending the path length in the tubular structure of the heat dissipator.

### BRIEF DESCRIPTION OF THE APPENDED DRAWINGS

FIG. 1 is an assembly diagram illustrating a water tank, an electrolytic module, and a heat dissipator in a hydrogen gas generating device with heat dissipator according to an embodiment of the present invention.
FIG. 2 is an exploded diagram illustrating the water tank, the electrolytic module, and the heat dissipator according to the embodiment of FIG. 1.
FIG. 3 is an exploded diagram illustrating the electrolytic module according to the embodiment of FIG. 2.
FIG. 4 is an exploded diagram illustrating the heat dissipator according to the embodiment of FIG. 2.
FIG. 5 is a cross-sectional schematic diagram illustrating the water tank, the electrolytic module, the heat dissipator, the bottom housing according to the embodiment of FIG. 1.
FIG. 6 is a schematic diagram illustrating another view of the water tank, the heat dissipator, and the fan of the hydrogen gas generating device with heat dissipator according to the embodiment of the present invention
FIG. 7 is a schematic diagram illustrating another view of a water tank, a heat dissipator, and a fan of a hydrogen gas generating device with heat dissipator according to a different embodiment of the present invention.
FIG. 8 is a cross-sectional diagram illustrating a water tank, a heat dissipator, and a water pump of a hydrogen gas generating device with heat dissipator according to an embodiment of the present invention.
FIG. 9A is an inner diagram illustrating a tubular structure of the hydrogen gas generating device with heat dissipator according to an embodiment of the present invention.
FIG. 9B is an inner diagram illustrating a tubular structure of the hydrogen gas generating device with heat dissipator according to another embodiment of the present invention.
FIG. 10A is an assembly diagram illustrating a water tank, an electrolytic module, and a heat dissipator in a hydrogen gas generating device with heat dissipator according to an embodiment of the present invention.
FIG. 10B is a cross-sectional schematic diagram illustrating the water tank, the electrolytic module, and the heat dissipator according to the embodiment of FIG. 10A.
FIG. 10C is a cross-sectional schematic diagram illustrating a water tank, an electrolytic module, and a heat dissipator in a hydrogen gas generating device with heat dissipator according to another embodiment of the present invention.
FIG. 11 is a schematic diagram illustrating another view of the water tank, the heat dissipator, and the fan of the hydrogen gas generating device with heat dissipator according to the embodiment of FIG. 10A.
FIG. 12 is an exploded diagram illustrating a hydrogen gas generating device with heat dissipator according to one embodiment of the present invention.
FIG. 13 is an exploded diagram illustrating another view of the hydrogen gas generating device with heat dissipator according to the embodiment of FIG. 12.
FIG. 14A is an exploded diagram illustrating a hydrogen gas generating device with heat dissipator according to one embodiment of the present invention.
FIG. 14B is an appearance diagram illustrating the hydrogen gas generating device with heat dissipator according to the embodiment of FIG. 14A.

### DETAILED DESCRIPTION OF THE INVENTION

For the sake of the advantages, spirits and features of the present invention can be understood more easily and clearly, the detailed descriptions and discussions will be made later by way of the embodiments and with reference of the diagrams. It is worth noting that these embodiments are merely representative embodiments of the present invention. However, it can be implemented in many different forms and is not limited to the embodiments of the present invention or corresponding embodiments. Rather, these embodiments are provided so that this disclosure will be thorough and complete.

The terms used in the various embodiments disclosed of the present invention are only used to describe specific embodiments, and are not intended to limit the various embodiments disclosed of the present invention. As used herein, the singular form also includes the plural form unless the context clearly indicates otherwise. Unless otherwise defined, all terms (including technical and scientific terms) used in this specification have the same meanings as commonly understood by one of ordinary skill in the art to which the various embodiments disclosed herein belong. The above terms (such as those defined in commonly used dictionaries) will be interpreted as having the same meaning as the contextual meaning in the same technical field, and will not be interpreted as having an idealized or overly formal meaning, Unless explicitly defined in the various embodiments disclosed herein.

In the description of this specification, the description with reference to the terms "an embodiment", "a specific embodiment", etc. means that a specific feature, structure, material, or characteristic described in conjunction with the embodiment is included in at least one embodiment of the present invention. In this specification, the schematic expressions of the above terms do not necessarily refer to the same embodiment. Furthermore, the particular features, structures, materials, or characteristics described may be combined in any suitable manner in any one or more embodiments.

In the description of the present invention, unless otherwise specified or limited, it should be noted that the terms "coupled", "connected", and "setup" should be understood in a broad sense. For example, they may be mechanically or electrically connected, may be connected directly, also may be connected by an intermediate medium. For those skilled in the art, the specific meanings of the above terms can be understood according to specific situations.

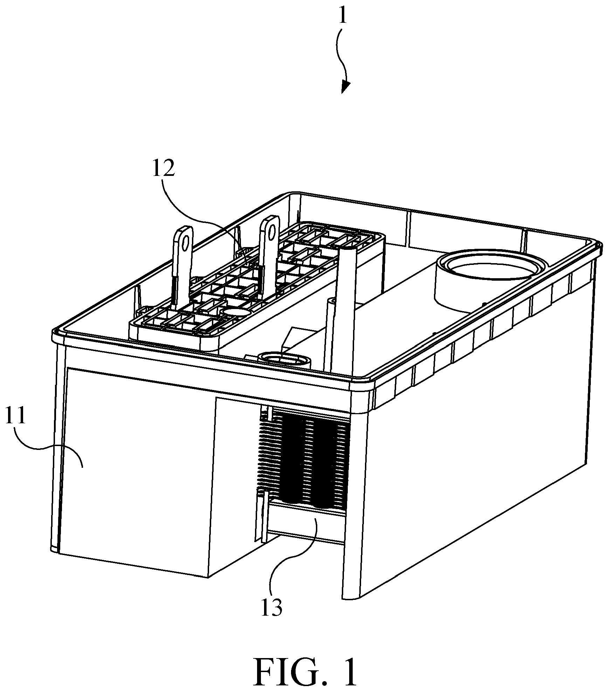

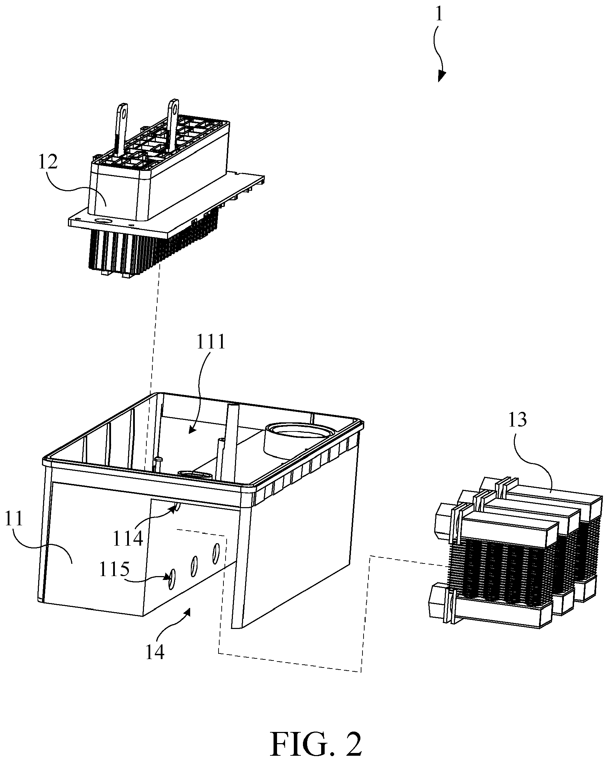

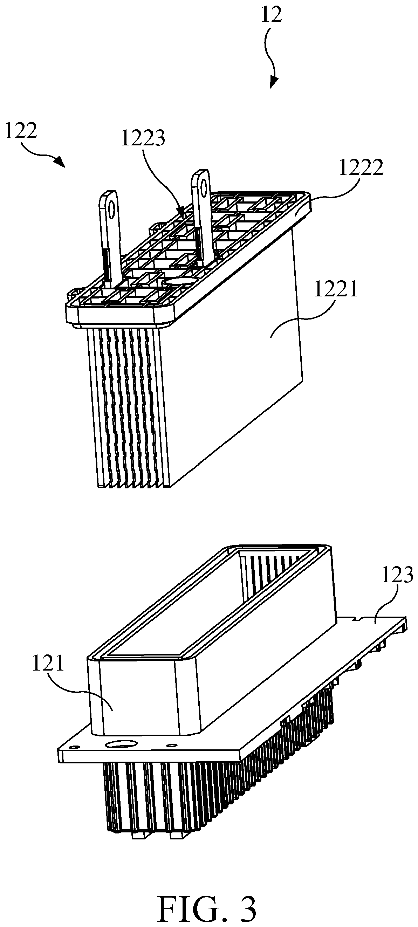

Please refer to FIG. 1 to FIG. 3. FIG. 1 is an assembly diagram illustrating a water tank 11, an electrolytic module 12, and a heat dissipator 13 in a hydrogen gas generating device 1 with heat dissipator according to an embodiment of the present invention. FIG. 2 is an exploded diagram illustrating the water tank 11, the electrolytic module 12, and the heat dissipator 13 according to the embodiment of FIG. 1. FIG. 3 is an exploded diagram illustrating the electrolytic module 12 according to the embodiment of FIG. 2. As shown in FIG. 1 to FIG. 2, a hydrogen gas generating device with heat dissipator 1 comprising a water tank 11, an electrolytic module 12, and a heat dissipator 13. The water tank 11 has an accommodating space 111 for accommodating water. The electrolytic module 12 is configured in the accommodating space 111 of the water tank 11 for receiving the water from the water tank 11 and electrolyzing the water to generate gas comprising hydrogen. The heat dissipator 13 couples to the water tank 11 for dissipating the heat of the water accommodated in the water tank 11.

As shown in FIG. 3, the electrolytic module 12 comprises a case 121 and an electrode assembly 122. The electrode assembly 122 can be accommodated in the case 121. The electrode assembly 122 comprises a plurality of electrodes 1221 and a plurality of pads 1222 connected to each electrode 1221. The pads 1222 are configured on the surface of each electrode 1221 to separate the electrodes 1221 respectively, so that a plurality of electrode channels can be formed between the plurality of electrode plates 1221 when the electrode assembly 122 is accommodated in the case 121. The bottom of the case 121 has a plurality of water ports (not shown in the figures) to make the water accommodated in the water tank 11 to flow into each electrode channel, so that each electrode 1221 can electrolyze the water to generate gas comprising hydrogen. In addition, the pads 1222 also have a plurality of gas ports 1223 for the gas comprising hydrogen flowing to the water tank 11. In practice, the electrodes 1221 can be formed by pressing iron wire or metal mesh. Therefore, the electrode 1221 has a plurality of holes (not shown in the figures). Furthermore, the contact area between each electrode 1221 and water can be increased by the holes when the electrolytic module 12 electrolyzes water, thereby improving the electrolysis efficiency. Besides, electrode channels can communicate with each other through the holes, so that the gas comprising hydrogen in a single electrode channel can not only move upwards, but also can flow to other electrode channels. Therefore, the flow of the gas comprising hydrogen in each electrode channel will not be hindered to affect the electrolysis efficiency.

In an embodiment, the electrolytic module 12 comprises a partition 123. The partition 123 is extending from the case 121. The shape of the partition 123 can correspond to the cross-sectional shape of the water tank 11, and can be used to fix the electrolytic tank 12 in the water tank 11. The partition 123 divides the accommodating space 111 of the water tank 11 into an upper hollow space and a lower hollow space. The water in the lower hollow space can flow into each electrode channel through the water ports on the lower side of the case 121 of the electrolytic module 12, and the gas comprising hydrogen generated by the electrolytic module 12 can flow into the upper hollow space through the electrode channels and the gas ports 1223.

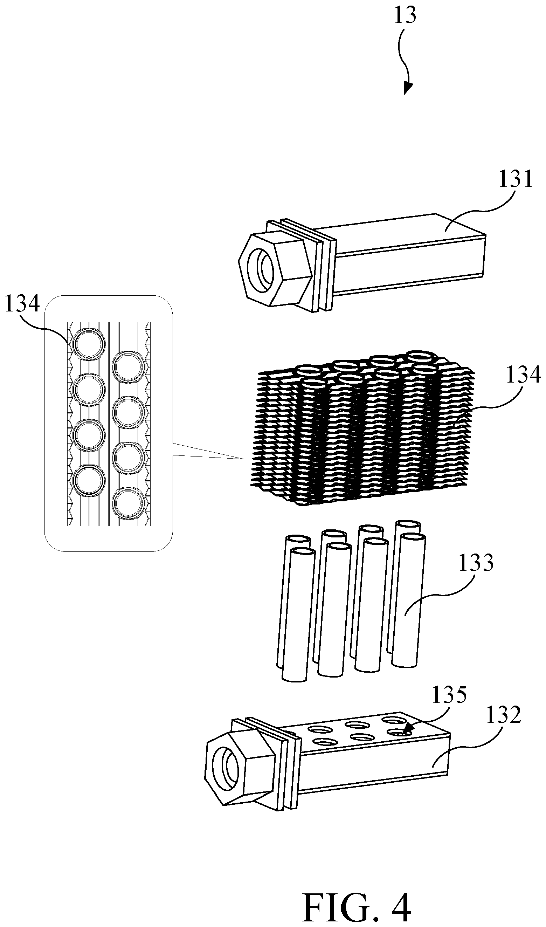

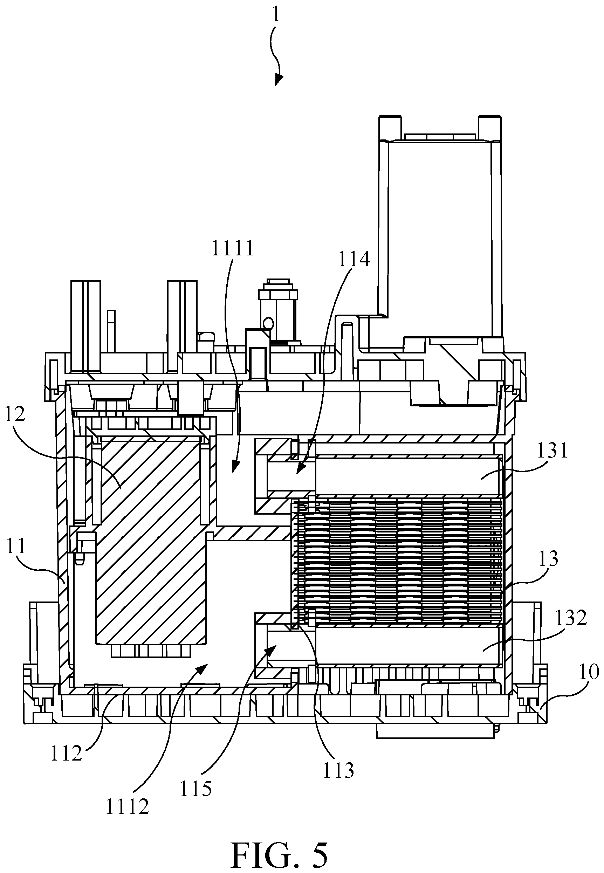

Please refer to FIG. 2, FIG. 4, and FIG. 5. FIG. 4 is an exploded diagram illustrating the heat dissipator 13 according to the embodiment of FIG. 2. FIG. 5 is a cross-sectional schematic diagram illustrating the water tank 11, the electrolytic module 12, the heat dissipator 13, the bottom housing 10 according to the embodiment of FIG. 1. As shown in FIG. 2, FIG. 4, and FIG. 5, in this embodiment, the water tank 11 is configured above the bottom housing 10 of the hydrogen gas generating device 1, and the heat dissipator 13 is configured on a side wall 113 of the water tank 11 and connected to the water tank 11. The heat dissipator 13 comprises an inlet tube 131, an outlet tube 132, a plurality of tubular structures 133, and a plurality of heat fins 134. The side wall 113 of the water tank 11 further has a first opening 114 and a second opening 115. The first opening 114 fluidly connects the upper hollow space 1111 of the water tank 11, and the second opening fluidly connects the lower hollow space 1112 of the water tank 11, wherein the first opening 114 and the second opening 115 are located on the same side of the side wall 113 of the water tank 11. In addition, the inlet tube 131 of the heat dissipator 13 connects to the first opening 114 and fluidly couples to the upper hollow space 1111, and the outlet tube 132 of the heat dissipator 13 connects to the second opening 115 and fluidly couples to the lower hollow space 1112. In practice, a water level of the water in the water tank 11 is higher than a bottom of the inlet tube 131, so that the water in the water tank 11 can flow into the inlet tube 131 through the first opening 114 which is located in the upper hollow space 1111. Then, after the water flows through the tubular structure 133 and the outlet tube 132 of the heat dissipator 13, the water flows back to the water tank 11 through the second opening 115 which is located in the lower hollow space 1112. The inlet tube 131 connects to the water tank 11 to receive the water from the water tank 11. The outlet tube 132 connects to the water tank 11 to output the water to the water tank 11. The plurality of tubular structures 133 are fluidly coupled to the inlet tube 131 and the outlet tube 132 respectively for the water to pass through. The heat fins 134 are penetrated by the at least one tubular structure 133 for dissipating the heat of the at least one tubular structure 133. In one embodiment, the inlet tube 131 and the outlet tube 132 respectively comprise a plurality of holes 135, and the plurality of holes 135 fluidly couple to the tubular structure 133 correspondingly. Therefore, a channel is formed in the inlet tube 131, the outlet tube 132 and each tubular structure 133. In practice, the inlet tube 131, the outlet tube 132, and the tubular structure 133 can be integrally formed, and the inlet tube 131 and the outlet tube 132 can be connected to both sides of the tubular structure 133 respectively by welding or brazing. Furthermore, the inlet tube 131 and the outlet tube 132 of the heat dissipator 13 also can be configured on the water tank 11 by locking, welding, or brazing.

In addition, the water tank 11 comprises a bottom 112 and the side wall 113 has a side wall height, the inlet tube 131 and the outlet tube 132 can be configured on different positions of the side wall 113. In practice, the inlet tube can be coupled to a position on the side wall with a height of 80%-100% of the side wall height from the bottom, and the outlet tube can be coupled to a position on the side wall with a height of 0%-20% of the side wall height from the bottom. That is to say, the outer edge of the inlet tube is on the same plane as the top of the water tank when the inlet tube is connected to a position on the side wall with a height of 100% of the side wall height from the bottom. Similarly, when the outlet tube is connected to a position on the side wall with a height of 0% of the side wall height from the bottom, the outer edge of the output tube is on the same plane as the bottom of the water tank. Therefore, when the heat dissipator 13 is disposed on the water tank 11, the inlet tube 131 fluidly couples to the upper hollow space 1111 of the water tank 11 and the outlet tube 132 fluidly couples to the lower hollow space 1112 of the water tank 11. In one embodiment, the inlet tube can be coupled to a position on the side wall with a height of 90%-100% of the side wall height from the bottom, and the outlet tube can be coupled to a position on the side wall with a height of 0%-10% of the side wall height from the bottom. However, the practical application is not limited to this, and the position of the inlet tube and the position of the outlet tube can be modified according to the water level of the water tank during the hydrogen gas generating device operating.

Please note that the number and the shapes of the first opening 114, the second opening 115, the inlet tube 131, the outlet tube 132, and the tubular structure 133 are not limited to the above drawings, and can be designed as required. In one embodiment, the water tank has a single first opening and a single second opening, and the inlet tube and the outlet tube are manifolds. Wherein, one side of the manifold is a single channel connected to the first opening or connected to the second opening of the water tank, and the other side of the manifold has a plurality of openings to connect the plurality of tubular structures respectively. In another embodiment, the water tank has a plurality of first openings and a plurality of second openings, and the inlet tube and the outlet tube are manifolds. Wherein, one side of the manifold has a plurality of openings connected to the first openings and the second openings, and the other side of the manifold has a single channel connected to the tubular structure.

Please refer to the heat fins 134 in FIG. 4. The heat fins 134 have a plurality of pores corresponding to the plurality of holes 135 of the inlet tube 131 and the plurality of holes 135 of the outlet tube 132 for the plurality of tubular structures 133 to penetrate. In practice, the heat fins 134 can be a two-piece combination structure or a three-dimensional wavy structure to increase the heat dissipation surface area per unit volume. The plurality of pores of the heat fins 134 also can be arranged based on the shape of the tubular structures 133. Alternatively, the heat fins 134 do not have any hole, but dissipates heat by surrounding the tubular structure 133. Furthermore, the plurality of heat fins can be arranged with a fixed interval.

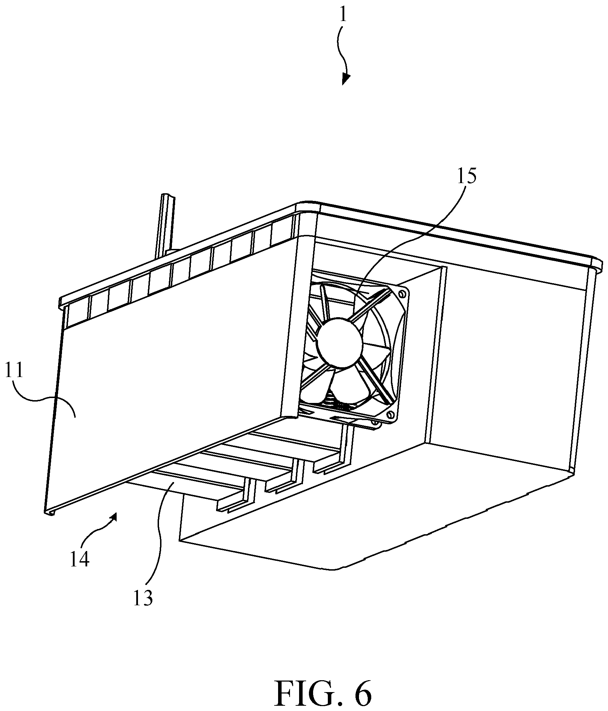

Please refer to FIG. 6. FIG. 6 is a schematic diagram illustrating another view of the water tank 11, the heat dissipator 13, and the fan 15 of the hydrogen gas generating device with heat dissipator 1 according to the embodiment of the present invention. In one embodiment, the hydrogen gas generating device with heat dissipator 1 further comprises a cooling channel 14. The cooling channel 14 is parallel to the water tank 11 and located on the side near the first opening 114 and the second opening 115. In practice, since the water tank 11 is configured above the bottom housing of the hydrogen gas generating device 1, a space between the outer shell of the water tank 11 and the bottom housing of the hydrogen gas generating device 1 forms the cooling channel 14. When the heat dissipator 13 is coupled to the water tank 11, the heat dissipator 13 is also located in the cooling channel 14 at the same time.

Furthermore, the hydrogen gas generating device 1 comprises a fan 15 configured in the cooling channel 14 for guiding air from an external environment into the cooling channel 14. In practice, the heat generated by the electrolysis reaction will be transferred to the tubular structure 133 of the heat dissipator 13 and the heat fins 134 of the heat dissipator 13, and then the heat will be dissipated through the heat dissipator. At this time, the fan 15 can guide external air into the cooling channel 14, thereby reducing the thermal energy and temperature of the tubular structures 133 and the heat fins 134. Therefore, the hydrogen gas generating device with heat dissipator of the present invention can reduce the thermal energy of the heat dissipator through the fan, thereby improving the heat dissipation efficiency.

In practice, when the hydrogen gas generating device works, the water located in the lower hollow space 1112 of the water tank 11 flows to the electrolytic module 12 through the water ports of the electrolytic module 12 for electrolyzing. The gas comprising hydrogen generated by electrolyzing through the electrolytic module 12 is outputted in the upper hollow space 1111. The thermal energy generated during electrolyzing will heat the water in the electrode channel, and then the heated water will enter the upper hollow space 1111. At this time, the water containing the thermal energy can flow through the first opening 114 of the water tank 11 to the inlet tube 131 of the heat dissipator 13, and then flow through the tubular structure 133. Wherein, when the water containing the thermal energy flows through the tubular structure 133, the thermal energy can be transferred to the tubular structure 133 and then be transferred to the plurality of heat fins 134 surrounding the tubular structure 133. After that, the thermal energy in the tubular structure 133 and the heat fins 134 is dissipating from the hydrogen gas generating device through the fan 15. Finally, the water after heat dissipation flows to the outlet tube 132 of the heat dissipator 13 and flows back to the water tank 11 through the second opening 115 of the water tank 11. Therefore, the hydrogen gas generating device with heat dissipator of the present invention can effectively dissipate heat through the partition and the heat dissipator which is fluidly coupling the upper hollow space and the lower hollow space.

Please note that the position of the heat dissipator in the present invention is not limited to being located on the right side of the water tank as shown in FIG. 2, and the number of the heat dissipator is also not limited to one. In one embodiment, the heat dissipator can be arranged on the left side of the water tank. In another specific embodiment, the hydrogen gas generating device comprises two heat dissipators disposed on two sides of the water tank respectively. Even in another specific embodiment, the hydrogen gas generating device comprises a heat dissipator disposed at another position different from the above embodiments around the water tank. Likewise, the position of the fan in the present invention is not limited to being located on the right side of the water tank as shown in FIG. 2. In a specific embodiment, the fan can be arranged on the left side of the water tank. In another specific embodiment, the hydrogen gas generating device may include two fans at the same time, which are respectively arranged on both sides of the water tank. The detailed structures of the above-mentioned heat dissipator and the heat fin located at other positions and their connection with the water tank are basically the same as those of the heat dissipator and the heat fin located on the right side of the water tank in the above-mentioned specific embodiment, so they will not be repeated herein.

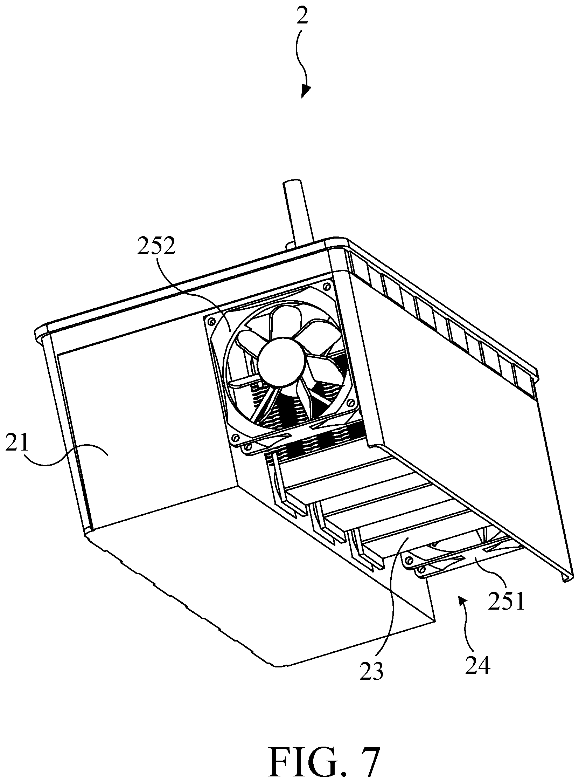

In practical applications, in addition to the arrangement of the above-mentioned specific embodiments, the fan may also adopt other forms. Please refer to FIG. 7. FIG. 7 is a schematic diagram illustrating another view of a water tank 21, a heat dissipator 23, and a fan of a hydrogen gas generating device with heat dissipator 2 according to a different embodiment of the present invention. The difference between this embodiment and the above embodiments is that the fan includes a first fan 251 and a second fan 252. As shown in FIG. 7, the first fan 251 and the second fan 252 are respectively disposed at both sides of the cooling channel 24, and the heat dissipator 23 is disposed between the first fan 251 and the second fan 252. The first fan 251 is configured to guide air from an external environment into the cooling channel 24, and the second fan 252 is configured to guide air from the cooling channel 24 to the external environment. In practical applications, when the heat dissipator 23 dissipates heat, the first fan 251 can guide air from the external environment into the cooling channel 24 to reduce the thermal energy and temperature of the tubular structure of the radiator 23 and to reduce the thermal energy and temperature of the heat fin of the radiator 23. In addition, the second fan 252 can further guide the hot air formed by the tubular structure of the heat dissipator 23 and the heat fin of the heat dissipator in the cooling channel 24 to the external environment, which not only reduces the temperature of the entire hydrogen gas generating device, but also improves the heat dissipation efficiency.

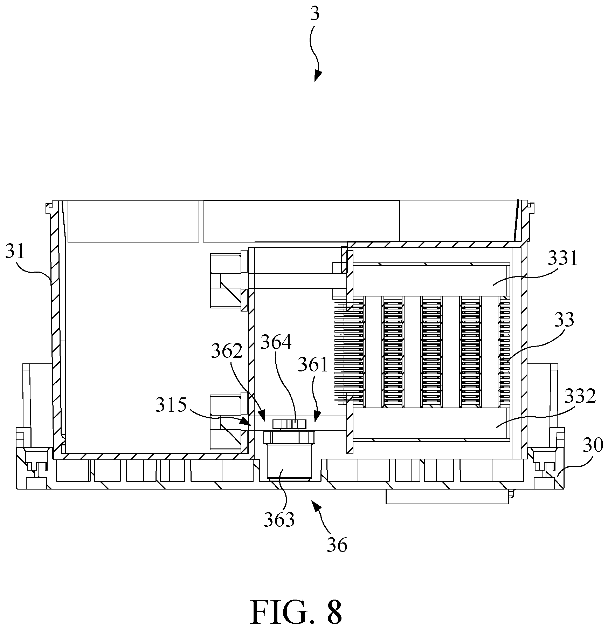

Besides, the heat dissipation mechanism of the water tank can be different from the above-mentioned specific embodiments. Please refer to FIG. 8. FIG. 8 is a cross-sectional diagram illustrating a water tank 31, a heat dissipator 33, and a water pump 36 of a hydrogen gas generating device with heat dissipator 3 according to an embodiment of the present invention. In this embodiment, the hydrogen gas generating device with heat dissipator 3 further comprises a water pump 36 configured on the bottom housing 30. The water pump 36 couples to the water tank 31 and the outlet tube 332 of the heat dissipator 33 for guiding the water dissipating heat by the heat dissipator 33 into the water tank 31. The water pump 36 comprises a water inlet port 361 and a water outlet port 362 respectively connected to the outlet tube 332 of the heat dissipator 33 and the second opening 315 of the water tank 31. Further, the water pump comprises an actuator 363 and a fan blade part 364, and the fan blade part 364 rotates to increase the water flow rate from the heat dissipator 33 to the lower hollow space of the water tank 31. Since the water tank 31 and the heat dissipator 33 are connected to each other, the water in the upper hollow space of the water tank 31 will be quickly guided into the heat dissipator 33 for heat dissipation under the driving force formed by the water pump 36 when the water pump 36 guides the water in the heat dissipator 33 into the lower hollow space of the water tank 31. Therefore, the water pump 36 can actively accelerate to guide the water into the water tank after heat dissipation, and can guide the water containing the thermal energy to the heat dissipator for heat dissipation at the same time. Besides, the position of the water pump is not limited. In another specific embodiment, the water pump is arranged between the first opening of the water tank and the inlet tube of the heat dissipator, so as to guide the water containing the thermal energy in the upper hollow space of the water tank to the heat dissipator. Therefore, the hydrogen gas generating device with heat dissipator of the present invention can actively guide the water in the water tank to the heat dissipator by the water pump for heat dissipation, thereby improving the heat dissipation efficiency. In addition to the inlet tube and the outlet tube, the water pump of the present invention also can be arranged on the water tank to send the water heated by the electrolysis process into the inlet tube. The detailed structure will be described later.

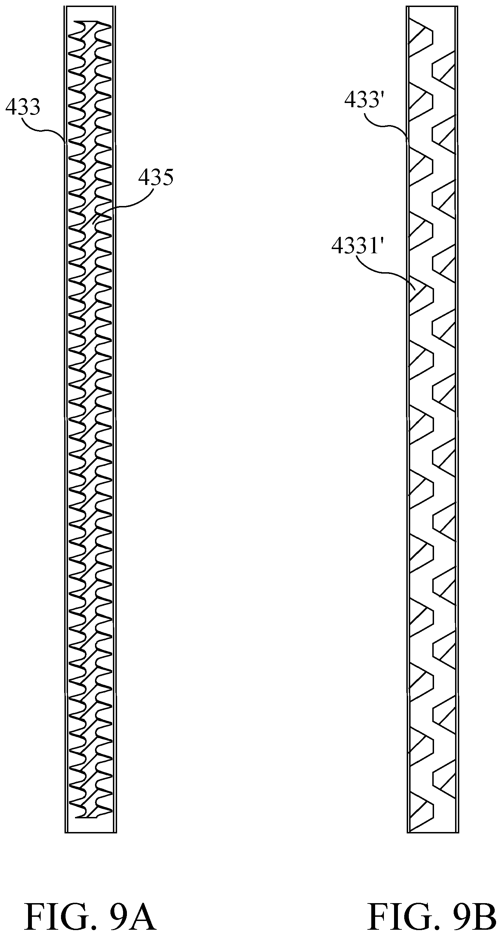

In addition, the tubular structure of the above heat dissipator can also comprise other structures to improve heat dissipation efficiency. Please refer to FIG. 9A and FIG. 9B. FIG. 9A is an inner diagram illustrating a tubular structure 433 of the hydrogen gas generating device with heat dissipator according to an embodiment of the present invention. FIG. 9B is an inner diagram illustrating a tubular structure 433' of the hydrogen gas generating device with heat dissipator according to another embodiment of the present invention. As shown in FIG. 9A, in a specific embodiment, the heat dissipator further comprises a plurality of spiral structures 435 respectively disposed in the tubular structures 433. In practice, the spiral structure 435 is an I-shaped spiral structure disposed in the tubular structure 433 to extend the inner path length of the tubular structure 433. When the water containing thermal energy flows into the tubular structure 433 of the heat dissipator, the water will be passed through the tubular structure 433 along the spiral structure 435. Therefore, the time that the water stays in the tubular structure 433 can be prolonged, thereby improving the heat dissipation efficiency. As shown in FIG. 9B, in one embodiment, the inner wall of the tubular structure 433' has a stagnation structure 4331'. In practice, the inner surface of the tubular structure 433' has a plurality of protrusions to form the stagnation structure 4331' to increase the inner path length of the tubular structure 433'. The protrusions may also be formed as internal thread structures on the inner surface of the tubular structure 433'. In another embodiment, the stagnation structure 4331' is not limited to the protrusions on the surface, but also includes other structures that can stagnate the flow rate of the liquid, such as a mesh structure.

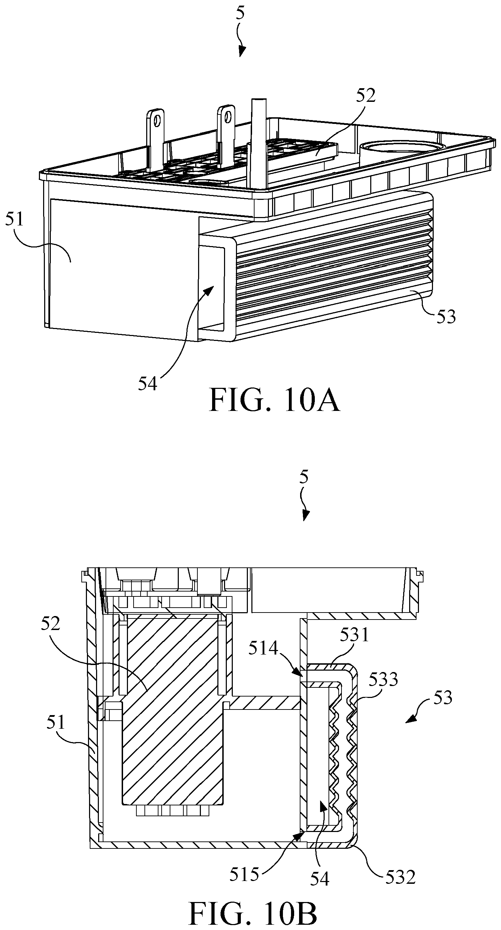

Please refer to FIG. 10A and FIG. 10B. FIG. 10A is an assembly diagram illustrating a water tank 51, an electrolytic module 52, and a heat dissipator 53 in a hydrogen gas generating device with heat dissipator 5 according to an embodiment of the present invention. FIG. 10B is a cross-sectional schematic diagram illustrating the water tank 51, the electrolytic module 52, and the heat dissipator 53 according to the embodiment of FIG. 10A. As shown in FIG. 10A and FIG. 10B, in this specific embodiment, the inlet tube 531, the outlet tube 532, and the tubular structure 533 are all flat pipe structures, and the shapes of the first opening 514 and the second opening 515 are corresponding to the shapes of the inlet tube 531 and the outlet tube 532 respectively. As shown in FIG. 10A, in practice, the widths of the inlet tube 531, the outlet tube 532 and the tubular structure 533 may be equal to the side length of the water tank 51. That is to say, the first opening 514 and the second opening 515 of the water tank 51 have a larger area and coverage. Therefore, when the hydrogen gas generating device is operating, the water containing thermal energy can quickly flow into the heat dissipator 53 in a large amount through the first opening 514 of the water tank 51, and the heat dissipated water can also quickly flow back to the water tank 51 through the second opening 515, thereby increasing the heat dissipation efficiency of the heat dissipator. However, the widths of the inlet tube 531, the outlet tube 532, and the tubular structure 533 of the heat dissipator 53 are not be limited, and can be any length or can be modified as required. Further, the shape of the tubular structure 533 may also be wavy, so as to prolong the time that the water containing thermal energy stays in the tubular structure 533 to improve the heat dissipation efficiency. Besides, the shape and arrangement of the tubular structure are not limited to this, and may also be the shape and arrangement of the above-mentioned specific embodiments.

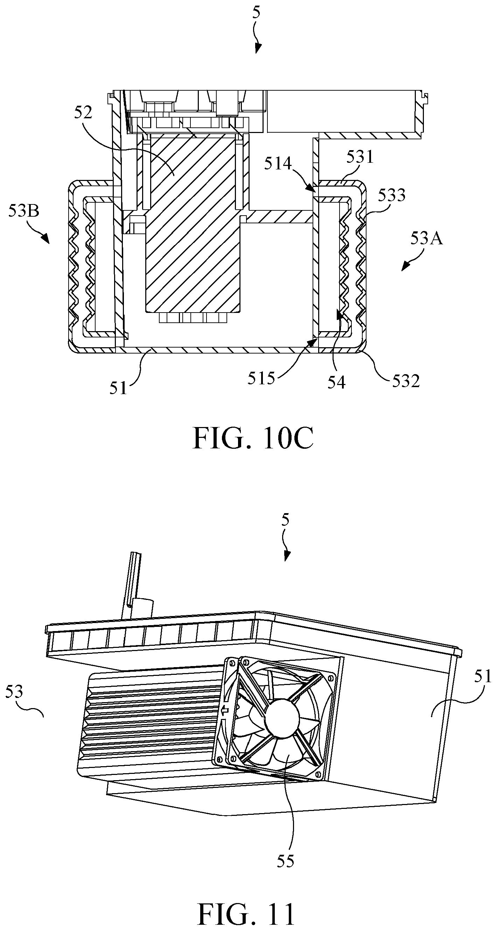

In addition to being located on the right side of the water tank (as shown in FIG. 10A), the heat dissipator of the hydrogen gas generating device of the present invention can also be located on the left side of the water tank. Furthermore, the number and arrangement position of the heat dissipator of the hydrogen gas generating device of the present invention are not limited. Please refer to FIG. 10C. FIG. 10C is a cross-sectional schematic diagram illustrating a water tank 51, an electrolytic module 52, and a heat dissipator 53 in a hydrogen gas generating device with heat dissipator 5 according to another embodiment of the present invention. In this embodiment, the hydrogen gas generating device comprises two heat dissipators (the first heat dissipator 53A and the second heat dissipator 53B) configured on the both sides of the water tank respectively, and the first heat dissipator 53A and the second heat dissipator 53B respectively comprise the inlet tube, the outlet tube, and the at least one tubular structure as mentioned above. The functions of the water tank 51, the electrolytic module 52, the first heat dissipator 53A, and the second heat dissipator 53B in this embodiment are basically the same as those of the corresponding components in the above-mentioned embodiments, and will not be repeated herein. Besides, the hydrogen gas generating device can further comprise a plurality of heat fins arranged on the outer side of the tubular structure to improve the heat dissipation efficiency.

Please refer to FIG. 10A, FIG. 10B, and FIG. 11. FIG. 11 is a schematic diagram illustrating another view of the water tank 51, the heat dissipator 53, and the fan 55 of the hydrogen gas generating device with heat dissipator 5 according to the embodiment of FIG. 10A. As shown in FIG. 10A, FIG. 10B, and FIG. 11, a cooling channel 54 is formed in the inlet tube 531, the outlet tube 532, the tubular structure 533, and the side wall of the water tank 51 when the heat dissipator 53 connects to the water tank 51. The hydrogen gas generating device 5 further comprises a fan 55 corresponding to the cooling channel 54 to guide air into the cooling channel 54. In practice, when the heat dissipator 53 dissipates heat, the thermal energy in the water is transferred to the tubular structure 533 of the heat dissipator 53. At this time, the fan 55 can guide the air into the cooling channel 54 to reduce the thermal energy and temperature of the tubular structure 533. It should be noted that the number and installation positions of the fan of the hydrogen gas generating device in the present invention are not limited to this. In one embodiment, the fan comprises a first fan and a second fan respectively disposed at both sides of the cooling channel. The first fan is configured to guide air from an external environment into the cooling channel, and the second fan is configured to guide the air from the cooling channel to the external environment. In another embodiment, the hydrogen gas generating device comprises two heat dissipators arranged on the both sides of the water tank at the same time, and the hydrogen gas generating device also comprise two fans arranged respectively on the both sides of the water tank for corresponding to the cooling channel formed by the heat dissipators.

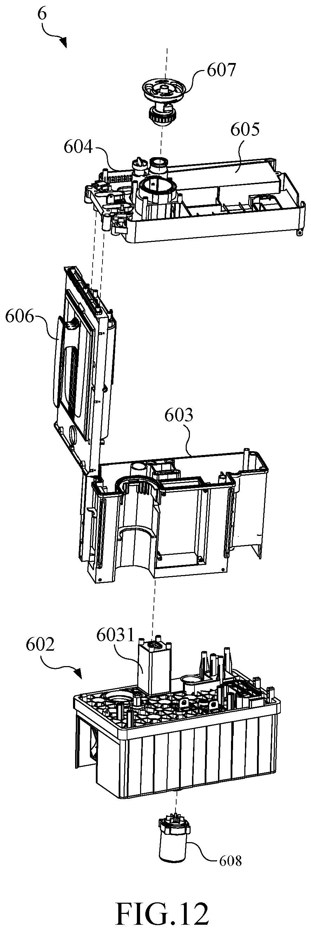

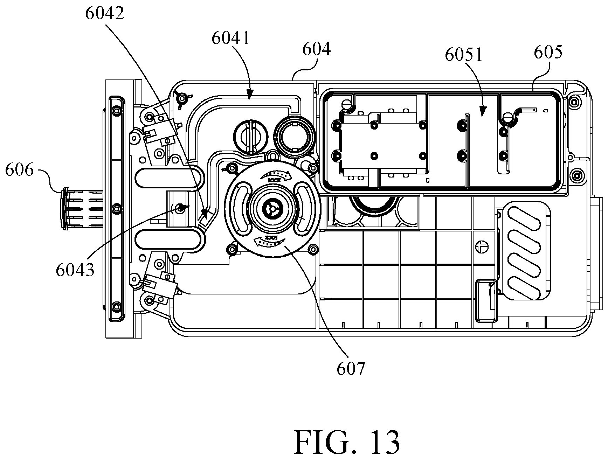

Please refer to FIG. 12 and FIG. 13. FIG. 12 is an exploded diagram illustrating a hydrogen gas generating device with heat dissipator 6 according to one embodiment of the present invention. FIG. 13 is an exploded diagram illustrating another view of the hydrogen gas generating device with heat dissipator 6 according to the embodiment of FIG. 12. As shown in FIG. 12 and FIG. 13, the hydrogen gas generating device 6 comprises an electrolytic module (not shown in the figures), a water tank 602, a humidification cup 603, an integrated pathway device 604, a condensate filter 605, a hydrogen water cup 606, and a nebulizer 607. The humidification cup 603 vertical stacks above the water tank 602, the integrated pathway device 604 vertical stacks above the humidification cup 603, and the condensate filter 605 is placed in an accommodating space formed by the integrated pathway device 604. In practice, the hydrogen gas generating device 6 further comprises a housing (not shown in the figures) configured to accommodate those above elements.

The condensate filter can be used to filter the gas comprising hydrogen and has a condensing channel 6051. In practice, the condensate filter 605 can be embedded in the integrated pathway device 604 and can be pulled out from the side of the integrated pathway device 604 rather than disassembling the entire hydrogen gas generating device 6 to replace the condensate filter. However, it is not limited to this, and the condensate filter 605 can also be fixedly arranged in the integrated pathway device 604. The humidification cup 603 comprises a humidification room (not shown in the figures) and a communication room 6031. The humidification room accommodates supplementary water for humidifying the gas comprising hydrogen. The communication room 6031 fluidly couples to the water tank 603 and the integrated pathway device 604 to pass the gas comprising hydrogen generated by the electrolytic module accommodated in the water tank 602 to the condensing channel 6051 of the condensate filter 605 through the communication room 6031 and the integrated pathway device 604. The gas comprising hydrogen in the condensate filter 605 flows into the humidification room of the humidification cup 603 after filtering. The hydrogen water cup 606 can accommodate drinking water, and the hydrogen water cup can be configured to inject hydrogen into the drinking water to form hydrogen water. The integrated pathway device 604 comprises a gas inlet passageway 6041, a gas outlet passageway 6042, and a gas communicating passageway 6043. Wherein, the gas inlet passageway 6041 and the gas outlet passageway 6042 are selectively coupled to the hydrogen water cup 606, and the gas communicating passageway 604 is selectively coupled the gas inlet passageway 6041 with the gas outlet passageway 6042. The nebulizer 607 couples to the gas outlet passageway 6042 of the integrated pathway device 604 to receive the gas comprising hydrogen, and generates an atomized gas and mix the atomized gas with the gas comprising hydrogen to form a healthy gas. Besides, the humidification cup 603, the condensate filter 605, the nebulizer 607, and the hydrogen water cup 606 can be embedded or directly coupled to the integrated pathway device 604.

Therefore, once the gas comprising hydrogen generated by the electrolytic module leaves the water surface of the water tank 602, the gas comprising hydrogen will quickly enter the communication room 6031 of the humidification cup 603. Next, the gas comprising hydrogen flows through the communication room 6031 of the humidification cup 603, the condensing channel 6051 of the condensate filter 605, the humidification room of the humidification cup 603, the gas inlet passageway 6041 and the gas outlet passageway 6042 of the integrated pathway device 604, and the nebulizer 607 in sequence. Wherein, the gas comprising hydrogen can selectively flow through the hydrogen water cup 606. However, it should be noted that the flow direction of the above-mentioned gas comprising hydrogen is one of the embodiments of the hydrogen gas generating device with heat dissipator of the present invention. Those skilled in the art can adjust the order of the components according to their own needs, but not limited thereto.

The nebulizer 607 generates an atomized gas to mix it with the gas comprising hydrogen to form a healthy gas, and the atomized gas can select from water vapor, atomized solution, volatile essential oil, or any combination thereof. In one embodiment, the nebulizer 607 comprises an oscillator for atomizing water, atomized solution, or volatile essential oil contained in the nebulizer 607 by oscillating to form atomized gas, and then mix the atomized gas with the gas comprising hydrogen to form the healthy gas. The nebulizer 607 can be selectively turned on or turn off according to the user's requirement, so as to provide the healthy gas containing the atomized gas or only a mixed gas (dilute the gas comprising hydrogen with extra oxygen gas) for the user to inhale.

In one embodiment, the hydrogen gas generating device further comprises a canister filter (not shown in figures) fluidly coupled to a gas output port of the hydrogen gas generating device, configured to filter microorganisms in the gas comprising hydrogen or kill bacteria in the gas comprising hydrogen. The canister filter may contain at least one of activated carbon, nano-silver sputtering, polyethylene terephthalate (PET), or polypropylene (PP) fiber cloth. The antibacterial types may include Staphylococcus aureus, Escherichia coli, Pseudomonas aeruginosa, drug-resistant Staphylococcus aureus, etc., but are not limited thereto. In practice, the gas output port of the hydrogen gas generating device is a vent of the nebulizer. After the gas comprising hydrogen mixed with the atomized gas to form the healthy gas, the canister filter can filter the germs in the healthy gas before the healthy gas is inhaled by the user. In another embodiment, the gas output port is formed on an outputting tube for supplying the gas comprising hydrogen or the mixed gas. One end of the canister filter is fluidly coupled to the outputting tube, and the other end of the canister filter is capable to couple to a respiratory tube worn by a user. Therefore, the canister filter can filter out the bacteria in the gas comprising hydrogen or in the mixed gas first, and then output the gas comprising hydrogen or the mixed gas into the respiratory tube for the user to inhale. It should be noted that those skilled in the art can add a plurality of canister filters and adjust their setting positions according to their own needs, and can also replace the canister filter as a disposable component.

In one embodiment, the hydrogen gas generating device further comprises a UV source (not shown in figures) configured in the hydrogen gas generating device, and the UV source is configured to emit UV light to filter microorganisms in the gas comprising hydrogen or to kill bacteria in the gas comprising hydrogen. The UV source can emit short wavelength UV light (UV-C) with a wavelength of 100 nm to 280 nm to sterilize the gas, but it is not limited to this. In one specific embodiment, the wavelength of the disinfection UV light emitted by the UV source is 200 nm to 300 nm. In practice, the UV source can be configured in the nebulizer to emit UV light to sterilize the healthy gas in the nebulizer. Besides, the UV source can be disposed near the gas outlet passageway to emit UV light to sterilize the gas outlet passageway. However, in practice, it is not limited to this. The UV source can also be configured in or near the water tank, the integrated pathway device, the humidification cup, or any piping through which the gas comprising hydrogen flows to emit UV light to sterilize these components.

The water pump may also be configured differently from the aforementioned specific embodiments. As shown in FIG. 12, in one embodiment, the water pump 608 can be configured on the bottom of the water tank 602 and connected to the lower hollow space of the water tank 602. In practice, the water pump 608 guides the water in the lower hollow space of the water tank 608 into the electrolytic module through the fan blade part, so as to improve the electrolysis efficiency. In addition, since the water pump 608 increases the flow rate of the water from the lower hollow space to the upper hollow space, the water in the upper hollow space also be accelerated to flow into the heat dissipator through the first opening for heat dissipation, thereby improving the heat dissipation efficiency.

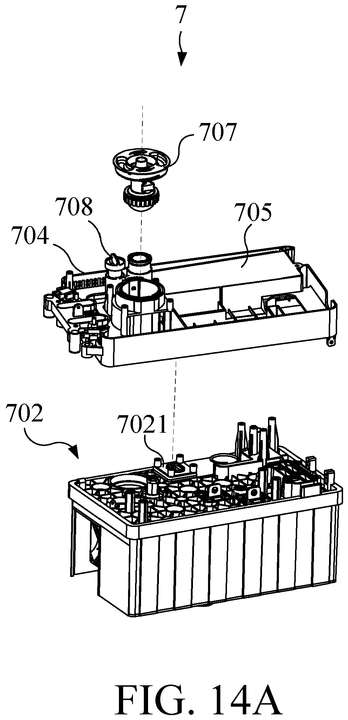

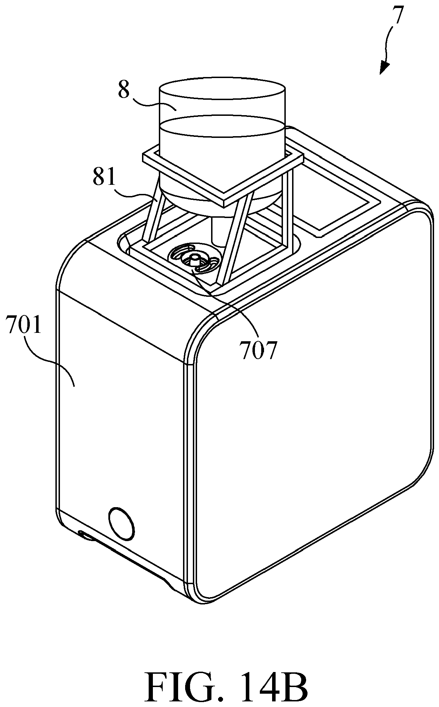

Furthermore, in addition to the above-mentioned forms, the hydrogen gas generating device with heat dissipator of the present invention can also adopt other forms. Please refer to FIG. 14A and FIG. 14B. FIG. 14A is an exploded diagram illustrating a hydrogen gas generating device with heat dissipator 7 according to one embodiment of the present invention. FIG. 14B is an appearance diagram illustrating the hydrogen gas generating device with heat dissipator 7 according to the embodiment of FIG. 14A. As shown in FIG. 14A, the difference between this embodiment and the above embodiments is that the hydrogen gas generating device with heat dissipator 7 in this embodiment only includes a water tank 702, an integrated pathway device 704, a condensate filter 705, and a nebulizer 707. The integrated pathway device 704 is vertically stacked above the water tank 702, the condensate filter 705 is arranged in the integrated pathway device 704, and the nebulizer 707 is connected to the integrated pathway device 704. Once the gas comprising gas generated by the electrolytic module of the water tank 702 leaves the water surface of the water tank 702, the gas comprising gas quickly enters the communication room 7021. Next, the gas comprising hydrogen flows through the communication room 7021, the condensing channel of the condensate filter 705, the gas inlet passageway and the gas outlet passageway of the integrated pathway device 704, and the nebulizer 707 in sequence.

Besides, the hydrogen gas generating device with heat dissipator 7 in the present invention further comprises a water inlet 708 configured on the integrated pathway device 704 and fluidly coupled to the condensing channel of the condensate filter 705. In practice, when the hydrogen gas generating device 7 operates for a period of time, the amount of water in the water tank 702 will gradually decrease. Therefore, the user can add water through the water inlet 708 to replenish water in the water tank 702. When the user adds water from the water inlet 708, the water will flow into the water tank 702 through the condensing channel of the condensate filter 705 and the communication room 7021. Furthermore, the condensate filter 705 will filter out electrolyte in the water and retain the electrolyte in the condensing channel, and the electrolyte remaining in the condensing channel will be flushed back into the water tank with water when the user adds water through the water inlet 708 and then the water flows through the condensing channel. It is noted that the position of the water inlet 708 is not limited to this. In a specific embodiment, the integrated pathway device further comprises a water supplementary channel, and the water supplementary channel fluidly couples to the water inlet and the condensing channel of the condensate filter.

As shown in FIG. 14A and FIG. 14B, the water inlet 708 of the hydrogen gas generating device with heat dissipator 7 can be directly coupled to a bucket 8, and the water in the water tank 702 is directly supplemented by supplementary water contained in the water bucket 8.

In this specific embodiment, the hydrogen gas generating device 7 further comprises a housing 701 configured to accommodate the water tank 702, the integrated pathway device 704, the condensate filter 705, and the nebulizer 707. The bucket 8 is configured out of the housing 701 and fluidly coupled to the water inlet 708 of the condensate filter 705. The bucket 8 is configured for supplying the supplementary water to the water tank 702 through the condensing channel of the condensate filter 705. In practice, the hydrogen gas generating device 7 further comprises a controller and a control valve (not shown in figures), and the controller is coupled to the control valve. The control valve can be configured on the water inlet 708, and the controller can be used to control the opening and closing of the control valve, thereby controlling water in the water bucket 8 to flow to the water inlet 708 of the condensate filter 705. Besides, the hydrogen gas generating device 7 further comprises a bucket holder 81 configured on the housing 701 of the hydrogen gas generating device 7 for holding the bucket 8 to improve stability and security.

As mentioned above, the hydrogen gas generating device with heat dissipator of the present invention can isolate the water containing thermal energy in the upper hollow space of the water tank through the partition, and can effectively dissipate heat by the heat dissipator which is fluidly coupled the upper hollow space with the lower hollow space. Also, the hydrogen gas generating device with heat dissipator of the present invention can reduce the thermal energy of the heat dissipator through the heat dissipator arranged in the cooling channel and the fan, thereby improving the heat dissipation efficiency. Furthermore, the hydrogen gas generating device of the present invention can also actively guide the water in the water tank to the heat dissipator for heat dissipation through the water pump, thereby improving the heat dissipation efficiency. Besides, the hydrogen gas generating device can improve heat dissipation efficiency by having a structure to extend the path length in the tubular structure of the heat dissipator.

With the examples and explanations mentioned above, the features and spirits of the invention are hopefully well described. More importantly, the present invention is not limited to the embodiment described herein. Those skilled in the art will readily observe that numerous modifications and alterations of the device may be made while retaining the teachings of the invention. Accordingly, the above disclosure should be construed as limited only by the meet's and bounds of the appended claims.

## Claims

1. A hydrogen gas generating device with heat dissipator, comprising:
a gas receiving tube configured to receive a breathing gas;
a water tank having an accommodating space for accommodating water;
an electrolytic module configured in the accommodating space of the water tank for receiving the water from the water tank and electrolyzing the water to generate gas comprising hydrogen;
an integrated pathway device configured above the electrolytic module and comprising a gas inlet passageway and a gas outlet passageway, wherein the gas inlet passageway is configured to receive the gas comprising hydrogen, and the gas outlet passageway is configured to output the gas comprising hydrogen;
a condensate filter coupled to the integrated pathway device, configured to filter the gas comprising hydrogen received by the gas inlet passageway; and
a heat dissipator coupled to the water tank, further comprising:
an inlet tube connected to an upper part of a side wall of the water tank and configured to receive the water from the water tank;
an outlet tube connected to a lower part of the side wall of the water tank and configured to output the water to the water tank; and
at least one tubular structure fluidly coupled to the inlet tube and the outlet tube for the water to pass through.

2. The hydrogen gas generating device of claim 1, wherein the electrolytic module comprises a case, a partition extending from the case to divide the accommodating space into an upper hollow space and a lower hollow space, the inlet tube is fluidly coupled to the upper hollow space and the outlet tube is fluidly coupled to the lower hollow space.

3. The hydrogen gas generating device of claim 2, wherein the side wall has a first opening and a second opening, the first opening fluidly connects the upper hollow space and the inlet tube, and the second opening fluidly connects the lower hollow space and the outlet tube.

4. The hydrogen gas generating device of claim 1, wherein a water level in the water tank is higher than a bottom of the inlet tube.

5. The hydrogen gas generating device of claim 1, wherein the heat dissipator further comprises at least one spiral structure configured in the at least one tubular structure for the water to pass through the tubular structure along the spiral structure.

6. The hydrogen gas generating device of claim 1, wherein the at least one tubular structure has a stagnation structure configured for the water to pass through the tubular structure along the spiral structure.

7. The hydrogen gas generating device of claim 1, wherein the heat dissipator has a plurality of heat fins penetrated by the at least one tubular structure for dissipating the heat of the at least one tubular structure.

8. The hydrogen gas generating device of claim 1, further comprising a cooling channel located beside the water tank, wherein the heat dissipator is accommodated in the cooling channel.

9. The hydrogen gas generating device of claim 8, further comprising a fan disposed near the heat dissipator, wherein the fan is configured to guide air from an external environment into the cooling channel.

10. The hydrogen gas generating device of claim 8, further comprising a first fan and a second fan located at both sides of the cooling channel respectively, wherein the first fan is configured to guide air from an external environment into the cooling channel, and the second fan is configured to guide the air from the cooling channel to the external environment.

11. The hydrogen gas generating device of claim 1, further comprising a canister filter for filtering the gas comprising hydrogen, wherein one end of the canister filter is fluidly coupled to a gas output port of the hydrogen gas generating device, and the other end of the canister filter is capable to couple to a respiratory tube worn by a user.

12. The hydrogen gas generating device of claim 1, further comprising a UV source disposed near the gas outlet passageway, wherein the UV source is configured to emit UV light to sterilize the gas outlet passageway.

13. The hydrogen gas generating device of claim 1, further comprising a humidification cup and a UV source, wherein the humidification cup is coupled to the integrated pathway device for accommodating a supplementary water and for receiving and humidifying the gas comprising hydrogen from the integrated pathway device, the UV source is configured in the integrated pathway device or the humidification cup for emitting UV light to sterilize the integrated pathway device or the humidification cup.

14. The hydrogen gas generating device of claim 1, wherein the inlet tube, the outlet tube, and the at least one tubular structure are integrally formed, and a shape of the at least one tubular structure is wavy.

15. The hydrogen gas generating device of claim 1, wherein the heat dissipator comprises a first heat dissipator and a second heat dissipator, the first heat dissipator and the second heat dissipator respectively comprise the inlet tube, the outlet tube, and the at least one tubular structure, the first heat dissipator is configured on the side wall of the water tank, and the second heat dissipator is configured on the other side wall of the water tank opposite to the side wall of the water tank.

16. The hydrogen gas generating device of claim 1, wherein the water tank comprises a bottom and the side wall with a side wall height, the inlet tube is coupled to a position on the side wall with a height of 80%-100% of the side wall height from the bottom, and the inlet tube is coupled to a position on the side wall with a height of 0%-20% of the side wall height from the bottom.

17. The hydrogen gas generating device of claim 1, further comprising a water pump coupled to the outlet tube, wherein the water pump is configured to guide the water cooled by the heat dissipator into the water tank.

18. The hydrogen gas generating device of claim 1, further comprising:
a housing configured to accommodate the water tank, the electrolytic module, the integrated pathway device, the condensate filter, and the heat dissipator; and
a bucket configured out of the housing and coupled to the condensate filter, the bucket being configured for supplying a supplementary water to the water tank through the condensate filter.

19. The hydrogen gas generating device of claim 18, further comprising a bucket holder configured on the housing for holding the bucket.

20. A hydrogen gas generating device with heat dissipator, comprising:
a water tank having an accommodating space for accommodating water;
an electrolytic module configured in the accommodating space of the water tank for receiving the water from the water tank and electrolyzing the water to generate gas comprising hydrogen; and
a heat dissipator coupled to the water tank, further comprising:
an inlet tube connected to a side wall of the water tank and configured to receive the water from the water tank;
an outlet tube connected to the side wall of the water tank and configured to output the water to the water tank; and
at least one tubular structure fluidly coupled to the inlet tube and the outlet tube for the water to pass through;
wherein a water level in the water tank is higher than a bottom of the inlet tube, and a shape of the at least one tubular structure is wavy.

21. A hydrogen gas generating device with heat dissipator, comprising:
a water tank having an accommodating space for accommodating water;
an electrolytic module configured in the accommodating space of the water tank for receiving the water from the water tank and electrolyzing the water to generate gas comprising hydrogen;
an integrated pathway device configured above the electrolytic module and comprising a gas inlet passageway and a gas outlet passageway, wherein the gas inlet passageway is configured to receive the gas comprising hydrogen, and the gas outlet passageway is configured to output the gas comprising hydrogen;
a heat dissipator coupled to the water tank, further comprising:
an inlet tube configured to receive the water from the water tank;
an outlet tube configured to output the water to the water tank; and
at least one tubular structure fluidly coupled to the inlet tube and the outlet tube for the water to pass through; and
a UV source configured in the hydrogen gas generating device, the UV source being configured to emit UV light to sterilize the hydrogen gas generating device.

22. The hydrogen gas generating device of claim 21, further comprising a canister filter fluidly coupled to a gas output port of the hydrogen gas generating device for filtering the gas comprising hydrogen.

23. The hydrogen gas generating device of claim 21, further comprising a nebulizer fluidly coupled to the gas outlet passageway to receive the gas comprising hydrogen, wherein the nebulizer comprises a gas output port, the nebulizer is capable to selectively generate an atomized gas and mix the atomized gas with the gas comprising hydrogen to form a healthy gas, and the UV source is disposed near the nebulizer and configured to emit UV light to sterilize the nebulizer.

24. The hydrogen gas generating device of claim 21, further comprising a humidification cup coupled to the integrated pathway device, wherein the humidification cup is configured for accommodating a supplementary water and receiving and humidifying the gas comprising hydrogen from the integrated pathway device, the UV source is configured near the integrated pathway device or the humidification cup for emitting UV light to sterilize the integrated pathway device or the humidification cup.
